# EUROPÄISCHE PATENTSCHRIFT

(11) **EP 0 705 641 B1**
(45) Veröffentlichungstag und Bekanntmachung des Hinweises auf die Patenterteilung: **07.01.1998**
(21) Anmeldenummer: 95115610.8
(22) Anmeldetag: 04.10.1995
(51) Int. Cl.: B01F 3/04, B28C 5/38, B01F 7/00

(54) **Mischvorrichtung zum Aufschäumen von pastösen Stoffen**
Mixer for foaming pasty substances
Mélangeur pour faire mousser des substances pâteuses

(30) Priorität: 06.10.1994 RU 94037503
(43) Veröffentlichungstag der Anmeldung: 10.04.1996
(73) Patentinhaber: Adler-Privat Deal, 350072, Krasnodar (RU)
(72) Erfinder: Kiseljow, Alexej Jurjewitsch, RU-350089 Krasnodar (RU); Trifonow, Jury Petrowitsch, RU-50002 Krasnodar (RU); Chadschimosowitsch, Kuschu Eduard, RU-350078 Krasnodar (RU); Tokarajew, Wasilij Iwanowitsch, RU-350075 Krasnodar (RU); Adler, Werner, RU-350700 Maikop (RU)
(74) Vertreter: Gramm, Werner, Prof. Dipl.-Ing.

(56) Entgegenhaltungen:
- CH-A- 319 589
- FR-A- 2 128 424
- SU-A- 887 202
- SU-A- 903 132

## Beschreibung

Die Erfindung betrifft eine Mischvorrichtung zum Aufschäumen von pastösen Stoffen, mit einer rotationssymmetrischen Mischkammer und einem darin angeordneten Mischwerk, mit einer in der Längsachse angeordneten Welle.

Mischvorrichtungen der gattungsgemäßen Art werden zum Aufschäumen von verschiedenen pastösen Stoffen verwendet, insbesondere solchen, die später durch Abkühlen oder durch chemische Reaktionen erhärten und dabei Luftblasen einschließen. So werden beispielsweise verschiedene Baumaterialien, wie beispielsweise Mörtel, dergestalt behandelt, um durch die eingeschlossenen Luftblasen eine bessere Isolationsfähigkeit und geringeres Gewicht zu erreichen. Auch in der Nahrungsmittel-Industrie werden beispielsweise Schokoladenpasten aufgeschäumt, um bei gleicher Masse ein optisch größeres Volumen zu erzeugen.

Die bekannten Mischvorrichtungen weisen ein zylindrisches Gehäuse auf, in dem ein Mischwerk angeordnet ist, das aus einer angetriebenen Welle mit daran angeordneten Flügeln besteht. Im unteren Teil des Gehäuses ist üblicherweise ein Druckluftanschluß angeordnet. Eine solche Mischvorrichtung wird mit einer Mischung aus dem aufzuschäumenden pastösen Stoff, beispielsweise Zement, und einem schaumbildenden, oberflächenaktiven Agens befüllt. Nach Durchmischung muß die Mischkammer entleert werden. Diese diskontinuierliche Arbeitsweise führt zum einen zu einer inhomogenen Verteilung der Luftblasen im aufzuschäumenden Stoff, andererseits sind die im industriellen Maßstab zu erzielenden Durchsätze pro Mischvorrichtung unbefriedigend.

Der Erfindung liegt daher die Aufgabe zugrunde, eine kontinuierlich arbeitende Mischvorrichtung zu schaffen, bei der sowohl die Durchsatzleistung wie auch die Homogenität und der Belüftungsgrad des aufgeschäumten Stoffes verbessert sind.

Die Lösung der Aufgabe ist bei einer gattungsgemäßen Mischvorrichtung dadurch gekennzeichnet, daß auf der Welle eine die Mischkammer in eine erste und eine zweite Teilkammer unterteilende Scheibe angeordnet ist, deren Durchmesser so bemessen ist, daß zwischen dem Umfang der Scheibe und der Wandung der Mischkammer ein Ringspalt verbleibt, daß die erste Teilkammer einen Zuflußstutzen für ein oberflächenaktives Agens und einen Druckluftanschluß aufweist, und daß die zweite Kammer zumindest je einen Zu- und Abfluß für einen kontinuierlichen Durchsatz an aufzuschäumendem Stoff aufweist.

Bei der so geschaffenen Vorrichtung wird in der ersten Teilkammer kontinuierlich Schaum erzeugt, der aufgrund des von der Druckluft in der Kammer erzeugten Überdruckes durch den Ringspalt zwischen dem Umfang der Scheibe und der Wandung der Mischkammer in die zweite Teilkammer gedrückt wird.

Durch die zweite Teilkammer fließt ein kontinuierlicher Massenstrom an aufzuschäumendem pastösen Stoff. Unter dem Einfluß des in der zweiten Teilkammer rotierenden Mischwerkes werden der aufzuschäumende pastöse Stoff und der in der ersten Teilkammer erzeugte Schaum vermischt und in eine Rotationsbewegung versetzt. Wegen der auftretenden Zentrifugalkräfte wird der aufzuschäumende pastöse Stoff nach außen an die Wandung der Mischkammer gedrückt, während der leichtere Schaum zur Mitte verdrängt wird.

Durch das Zusammenwirken von zwei Effekten - der unmittelbaren Einwirkung der Mischflügel des Mischwerks einerseits und der durch die Zentrifugalkräfte erzeugten Bewegung des Schaums über den gesamten Querschnitt der Teilkammer andererseits - wird eine gleichmäßige Verteilung der kleinen Luftbläschen im gesamten aufzuschäumenden Stoff gewährleistet.

In einer bevorzugten Ausführungsform ist die Längsachse der Mischkammer senkrecht und die zweite Teilkammer oberhalb der ersten angeordnet.

Die Größe des Ringspalts zwischen der Scheibe und dem Gehäuse der Mischkammer ergibt sich einerseits durch die Notwendigkeit, zu verhindern, daß der schwerere zu verschäumende pastöse Stoff unter der Wirkung der Schwerkraft in die der Schaumbildung dienende erste Kammer eindringt, daß aber andererseits der Durchtritt des feinporigen Schaums in die zweite Teilkammer, wo er mit dem aufzuschäumenden Stoff vermischt werden soll, unter dem Einfluß der Druckluft ermöglicht werden muß.

Bei Experimenten hat sich herausgestellt, daß eine Größe des Ringspalts zwischen 3 und 15 % der gesamten Querschnittsfläche der Mischkammer in der gleichen Radialebene, d.h. in der Radialebene der Scheibe, zu guten Ergebnissen führt.

Bei mit einem Prototyp gemäß der Erfindung ausgeführten Versuchen gelang es, belüfteten (porisierten) Mörtel herzustellen, dessen mittlere Dichte um 25 bis 30 % geringer war, als von Mörtel, der mit Vorrichtungen gemäß dem Stand der Technik hergestellt war. Die Homogenität in bezug auf die Dichte konnte um 7 bis 10 %, die Homogenität in bezug auf die Festigkeit um 8 bis 10 % erhöht werden, wobei die Produktionsleistung wegen des erstmals ermöglichten kontinuierlichen Betriebes deutlich erhöht war.

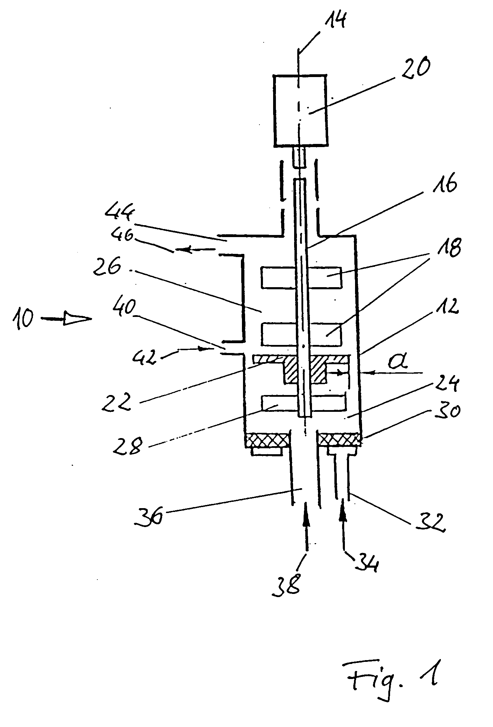

Die Erfindung wird im folgenden unter Bezugnahme auf ein in der Zeichnung dargestelltes Ausführungsbeispiel näher erläutert. Die einzige Figur der Zeichnung zeigt einen Längsschnitt durch eine erfindungsgemäße Mischvorrichtung.

Eine erfindungsgemäße Mischvorrichtung 10 besteht aus einer Mischkammer 12, die die geometrische Grundform eines Zylinders aufweist. In der Längsachse 14 ist eine Antriebswelle 16 angeordnet, die Mischflügel 18 trägt und so ein Mischwerk bildet. Die Welle 16 wird durch einen Elektromotor 20 angetrieben. Auf der Welle 16 ist weiterhin eine Scheibe 22 angeordnet, die die Mischkammer 12 unter Belassung eines ringförmigen Spaltes a in eine erste, untere Teilkammer 24 und eine zweite, obere Teilkammer 26 unterteilt. In der unteren Teilkammer 24 sind ebenfalls Mischflügel 28 auf der Welle 16 angeordnet. Am Boden der ersten Teilkammer 24 ist ein Filter 30 angeordnet, der durch einen Druckluftanschluß 32 mit Druckluft beaufschlagt werden kann. Die durch den Druckluftanschluß 32 einströmende Druckluft 34 wird durch den Filter 30 fein verteilt und strömt auf der gesamten Querschnittsfläche des Filters 30 und damit der gesamten Bodenfläche der Mischkammer 12 aus. Durch einen Anschlußstutzen 36 wird ein oberflächenaktives, d.h. schaumbildendes Agens 38 zugeführt. Die rotierenden Mischflügel 28 bewirken zusammen mit der einströmenden Druckluft 34 eine starke Schaumbildung in der ersten Teilkammer 24, die ansonsten frei von anderen Stoffen ist.

Unter dem durch die Druckluft 34 aufgebauten Innendruck wird der erzeugte Schaum durch den Ringspalt a gepreßt. Die Fläche des Ringspalts a beträgt zwischen 3 und 15 % der Querschnittsfläche der Mischkammer 12.

Unmittelbar oberhalb der Radialebene der Scheibe 22 ist ein Stutzen 40 als Zufluß für den aufzuschäumenden pastösen Stoff 42 angeordnet. Der zugeführte Stoff 42 verläßt über einen Abflußstutzen 44 die obere, zweite Mischkammer 26.

Durch die Rotation des Mischwerks 16/18 wird ein Feld von Zentrifugalkräften erzeugt, das den eintretenden Massenstrom an pastösem, zu vermischendem Stoff gegen die Wandung der oberen Kammer 26 drückt. Das durch den Ringspalt a eintretende Schaumgemisch steigt unter dem durch die Druckluft 34 erzeugten Druck an der Wandung der Mischkammer 12 empor und wird sodann durch die nach außen gedrückten, schwereren Stoffteilchen des zu vermischenden, pastösen Stoffes nach innen gedrückt.

Durch das Zusammenwirken mit den rotierenden Mischflügeln 18 wird so eine innige Vermischung von pastösem Stoff 42 und Schaum/Luftgemisch bewirkt, so daß der aus dem Abflußstutzen 44 austretende Massenstrom 46 einen hohen Anteil an homogen verteilten Luftblasen enthält.

Bei Versuchen mit aeriertem Zement wurden im Vergleich zu bekannten Anlagen folgende besseren Werte erzielt:

| | Durchschnittliche Dichte t/m³ | Standardabweichung der Dichte % | Standardabweichung der Festigkeit % |
|---|---|---|---|
| Mischvorrichtung gemäß dem Stand der Technik | 1166 | 13,4 | 12.6 |
| erfindungsgemäße Mischvorrichtung | 860 | 2,5 | 4,3 |

Fu/ro

### Bezugszeichenliste

- 10: Mischvorrichtung
- 12: Mischkammer
- 14: Längsachse (von 12)
- 16: Welle
- 18: Mischflügel
- 20: Elektromotor
- 22: Scheibe
- 24: untere, erste Teilkammer
- 26: obere, zweite Teilkammer
- 28: Mischflügel
- 30: Filter
- 32: Druckluftanschluß
- 34: Druckluft
- 36: Zuflußstutzen (für 38)
- 38: oberflächenaktives Agens
- 40: Zufluß (für 42)
- 42: aufzuschäumender pastöser Stoff
- 44: Abfluß (für 46)
- 46: aufgeschäumter pastöser Stoff
- a: Ringspalt (zwischen 22 und 12)

Fu/ro

## Patentansprüche

1. Mischvorrichtung zum Aufschäumen von pastösen Stoffen, mit einer rotationssymmetrischen Mischkammer (12) und einem darin angeordneten Mischwerk (16/18), mit einer in der Längsachse (14) angeordneten Welle (16), **dadurch gekennzeichnet, daß** auf der Welle (16) eine die Mischkammer in eine erste (24) und eine zweite Teilkammer (26) unterteilende Scheibe (22) angeordnet ist, deren Durchmesser so bemessen ist, daß zwischen dem Umfang der Scheibe und der Wandung der Mischkammer ein Ringspalt (a) verbleibt, daß die erste Teilkammer (24) einen Zuflußstutzen (36) für ein oberflächenaktives Agens (38) und einen Druckluftanschluß (32) aufweist, und daß die zweite Kammer (26) zumindest je einen Zu- und Abfluß (40/44) für einen kontinuierlichen Durchsatz an aufzuschäumendem Stoff (42/46) aufweist.

2. Mischvorrichtung nach Anspruch 1, **dadurch gekennzeichnet, daß** die Längsachse (14) senkrecht und die zweite Kammer (26) oberhalb der ersten Kammer (24) angeordnet ist.

3. Mischvorrichtung nach Anspruch 2, **dadurch gekennzeichnet, daß** der zumindest eine Zufluß (40) für den aufzuschäumenden Stoff (42) in einer unmittelbar oberhalb der Scheibe (22) angeordneten Radialebene liegt.

4. Mischvorrichtung nach einem der vorhergehenden Ansprüche, **dadurch gekennzeichnet, daß** der Zuflußstutzen (36) für das oberflächenaktive Agens (38) im Boden der ersten Teilkammer (24) angeordnet ist.

5. Mischvorrichtung nach einem der vorhergehenden Ansprüche, **dadurch gekennzeichnet, daß** im Boden der ersten Kammer (24) ein die Druckluft (34) verteilender Filter (30) angeordnet ist.

6. Mischvorrichtung nach einem der vorhergehenden Ansprüche, **dadurch gekennzeichnet, daß** die Fläche des Ringspalts (a) 3 bis 15 % der Querschnittsfläche der Mischkammer (12) in der Radialebene der Scheibe (22) beträgt.

7. Mischvorrichtung nach einem der vorhergehenden Ansprüche, **dadurch gekennzeichnet, daß** die Welle (16) des Mischwerks sowohl in der ersten Teilkammer (24) wie in der zweiten Teilkammer (26) Mischflügel (18/28) trägt.

## Claims

1. Mixer for foaming pasty substances, with a rotationally symmetrical mixing chamber (12) and a mixing unit (16/18) which is disposed in the latter and comprises a shaft (16) disposed along the longitudinal axis (14), characterised in that a disc (22), which divides the mixing chamber into a first (24) and a second sub-chamber (26), is disposed on the shaft (16), the diameter of which disc is of a dimension such that an annular gap (a) remains between the circumference of the disc and the wall of the mixing chamber, that the first sub-chamber (24) comprises an inlet connection piece (36) for a surfactant (38) and a compressed-air connection (32), and that the second chamber (26) comprises at least one inlet and one outlet (40/44) for a continuous throughput of substance (42/46) to be foamed.

2. Mixer according to claim 1, characterised in that the longitudinal axis (14) is perpendicular and the second chamber (26) is disposed above the first chamber (24).

3. Mixer according to claim 2, characterised in that the inlet (40), of which there is at least one, for the substance (42) to be foamed lies in a radial plane disposed directly above the disc (22).

4. Mixer according to one of the preceding claims, characterised in that the inlet connection piece (36) for the surfactant (38) is disposed in the bottom of the first sub-chamber (24).

5. Mixer according to one of the preceding claims, characterised in that a filter (30), which disperses the compressed air (34), is disposed in the bottom of the first chamber (24).

6. Mixer according to one of the preceding claims, characterised in that the area of the annular gap (a) constitutes 3 to 15% of the cross-sectional area of the mixing chamber (12) in the radial plane of the disc (22).

7. Mixer according to one of the preceding claims, characterised in that the shaft (16) of the mixing unit bears mixing blades (18/28) both in the first sub-chamber (24) and in the second sub-chamber (26).

## Revendications

1. Mélangeur pour faire mousser des substances pâteuses, comportant une chambre de mélange (12) à symétrie de révolution et un outillage de mélange (16/18) agencé dedans, avec un arbre (16) disposé dans l'axe longitudinal (14), caractérisé en ce qu'un disque (22) disposé sur l'arbre (16) subdivise la chambre de mélange en une première (24) et une seconde chambre partielles (26), le diamètre du disque étant dimensionné pour qu'il subsiste une fente annulaire (a) entre la périphérie du disque et la paroi de la chambre de mélange, en ce que la première chambre partielle (24) présente un raccord d'amenée (36) pour un agent tensio-actif (38) et un raccord d'air comprimé (32), et en ce que la seconde chambre (26) présente au moins un raccord d'arrivée et un raccord de départ (40/44) pour un transit continu de matière à faire mousser (42/46).

2. Mélangeur selon la revendication 1, caractérisé en ce que l'axe longitudinal (14) est disposé verticalement et la seconde chambre (26) est disposée au-dessus de la première chambre (24).

3. Mélangeur selon la revendication 2, caractérisé en ce que l'au moins une arrivée (40) pour la matière à faire mousser (42) se trouve dans un plan radial situé directement au-dessus du disque (22).

4. Mélangeur selon l'une des revendications précédentes, caractérisé en ce que le raccord d'amenée (36) pour l'agent tensio-actif (38) est disposé dans le fond de la première chambre (24).

5. Mélangeur selon l'une des revendications précédentes, caractérisé en ce qu'un filtre (30) répartissant l'air comprimé (34) est disposé dans le fond de la première chambre (24).

6. Mélangeur selon l'une des revendications précédentes, caractérisé en ce que l'aire de la fente annulaire (a) s'élève à 3 à 15% de l'aire de section transversale de la chambre de mélange (12) dans le plan radial du disque (22).

7. Mélangeur selon l'une des revendications précédentes, caractérisé en ce que l'arbre (16) de l'outillage de mélange porte des pales mélangeuses (18/22) dans la première chambre partielle (24) comme dans la seconde chambre partielle (26).
